# EUROPEAN PATENT APPLICATION

(11) **EP 1 298 943 A2**
(43) Date of publication of application: **02.04.2003**
(21) Application number: 02017950.3
(22) Date of filing: 09.08.2002
(51) Int. Cl.: H04Q 3/72

(54) **Method for processing incoming call in telephone having electronic mail function**

(30) Priority: 29.09.2001 KR 2001061063
(71) Applicant: SAMSUNG ELECTRONICS CO., LTD., Suwon-City, Kyungki-do (KR)
(72) Inventor: Han, Sung-Leek, Suwon-city, Kyungki-do (KR)
(74) Representative: Grünecker, Kinkeldey, Stockmair & Schwanhäusser Anwaltssozietät

(57) **Abstract**

The present invention relates to a method of processing an incoming call in a telephone having an electronic mail function, by which the telephone can automatically receive an electronic mail at the arrival thereof so that a user can be notified of the arrival of the electronic mail. The method of the invention includes detecting caller identification (CID) information following a ring signal to confirm the number of a caller at the arrival of a ring signal notifying the incoming call through the office line, and includes outputting a call-receiving ring according to the ring signal when the number of the caller is identical to the number of a wire telephone, and includes connecting the modem to the office line to receive the electronic mail when the number of the caller is identical to the leased line number of the electronic mail server.

## Description

The present invention relates to an electronic mail service system, and more particularly, to a method of processing an incoming call in telephones having an electronic mail function.

Personal computers (PCs) have been used to transmit and receive electronic mail messages.
However, a new technology is under development which enables a user to receive electronic mail messages using a telephone connected to an office line. An example of this technology is disclosed in Korean Utility Model Application No. 1999-13996, entitled "Telephone Having Electronic Mail Function", published on 26 May 1999. This document discloses a technology which enables a telephone to use electronic mail. The telephone which can use electronic mail includes a display unit and a modem. The telephone can be a wire telephone, which is a telephone connected to an office line.

In some telephones having electronic mail functionality, the receiving of electronic mail is executed only when a caller calls out from the telephone, requesting a voice conversation. In other words, the user of the telephone is required to initiate an outgoing telephone call in order to receive electronic mail. According to a method of receiving new electronic mail, a user of the telephone frequently links to an electronic mail server by personally making an outgoing telephone call to confirm and read any newly arrived electronic mail. Therefore, the above telephone can be inconvenient to the user because frequent links may be made to the electronic mail server to confirm whether new electronic mail has arrived. The user cannot know about the arrival of new electronic mail without personally linking to the electronic mail server. Also, a telephone fee may be imposed for every link to the electronic mail server which would cause an undesired economic burden on the user.

While the aforementioned features have some advantages, I note that it would be desirable to provide a more convenient method of using a telephone with an electronic mail function.

Accordingly, the present invention has been made to solve the foregoing problems and it is the object of the present invention to provide a method of processing an incoming call in a telephone having an electronic mail function, by which the telephone can automatically receive an electronic mail at the arrival thereof so that a user can be notified of the arrival of the electronic mail.

According to an aspect of the invention to obtain the above object, there is provided a method comprising: detecting caller identification (CID) information following a ring signal to confirm the number of a caller at the arrival of a ring signal notifying the incoming call through the office line; if the number of the caller is identical with the number of a wire telephone, outputting a call-receiving ring according to the ring signal; and if the number of the caller is identical with the leased line number of the electronic mail server, connecting the modem to the office line to receive the electronic mail.

To achieve the above object in accordance with the principles of the present invention, as embodied and broadly described, the present invention provides a method, comprising: when a ring signal of an incoming call is received, detecting caller identification information of the incoming call; when the detected caller identification information corresponds to an electronic mail server, receiving electronic mail; and when the detected caller identification information does not correspond to the electronic mail server, outputting a receiving ring according to the ring signal.

To achieve the above object in accordance with the principles of the present invention, as embodied and broadly described, the present invention further provides a method of processing an incoming call, comprising: when a ring signal of an incoming call is received through an office line by a telephone that has a display and a modem and a short message service processing unit, detecting caller identification information of the incoming call to confirm number of a caller; when the number of the caller corresponds to a number of an electronic mail server, connecting the modem to the office line to receive at least one electronic mail message; and when the number of the caller corresponds to a number of a short message service server, connecting the short message service processing unit to the office line to receive at least one short message service (SMS) message; when the number of the caller corresponds to a number of a wire telephone, outputting a call-receiving ring according to the ring signal.

To achieve the above object in accordance with the principles of the present invention, as embodied and broadly described, the present invention further provides an apparatus, comprising: a telephone connected to an office line, said telephone comprising: a memory storing at least a first number corresponding to an electronic mail server; a modem receiving electronic mail from the electronic mail server through the office line; and a central processing unit being connected to and controlling said modem and said memory; when a ring signal of the incoming call is received by said telephone, said telephone detecting caller identification information of the incoming call; when the detected caller identification information corresponds to the first number stored in said memory, said central processing unit connecting said modem to the office line to receive the electronic mail from the electronic mail server; when the detected caller identification information corresponds to a wire telephone, said telephone outputting a receiving ring according to the ring signal.

The present invention is more specifically described in the following paragraphs by reference to the drawings attached only by way of example. Other advantages and features will become apparent from the following description and from the claims.

In the accompanying drawings, which are incorporated in and constitute a part of this specification, embodiments of the invention are illustrated, which, together with a general description of the invention given above, and the detailed description given below, serve to exemplify the principles of this invention.
Fig. 1 is a block diagram illustrating an electronic mail service system, in accordance with the principles of the present invention;
Fig. 2 is a block diagram illustrating a telephone, in accordance with the principles of the present invention; and
Fig. 3 is a flow chart illustrating a method of processing an incoming call, in accordance with the principles of the present invention.

While the present invention will be described more fully hereinafter with reference to the accompanying drawings, in which preferred embodiments of the present invention are shown, it is to be understood at the outset of the description which follows that persons of skill in the appropriate arts may modify the invention here described while still achieving the favorable results of this invention. Accordingly, the description which follows is to be understood as being a broad, teaching disclosure directed to persons of skill in the appropriate arts, and not as limiting upon the present invention.

Illustrative embodiments of the invention are described below. In the interest of clarity, not all features of an actual implementation are described. In the following description, well-known functions or constructions are not described in detail since they could obscure the invention with unnecessary detail. It will be appreciated that in the development of any actual embodiment numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill having the benefit of this disclosure.

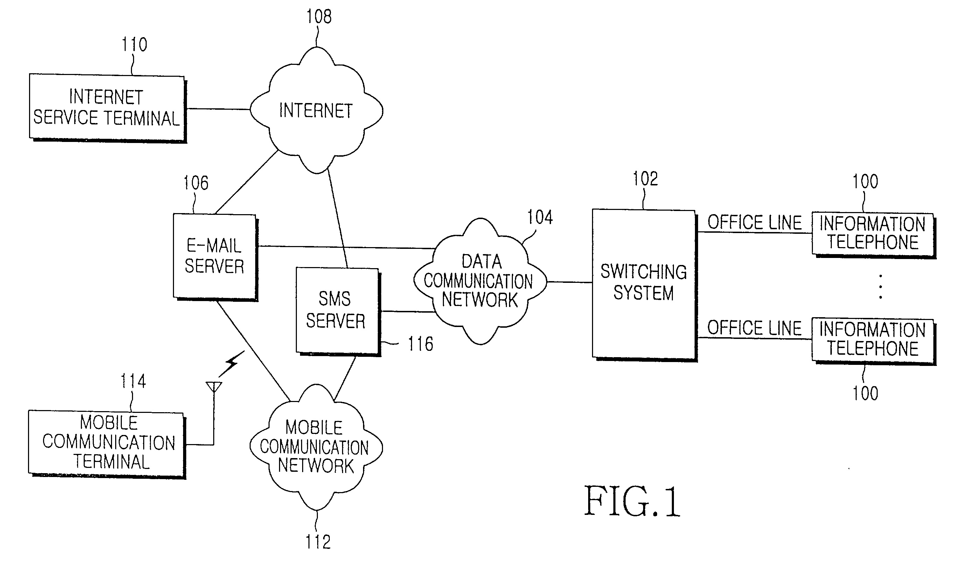

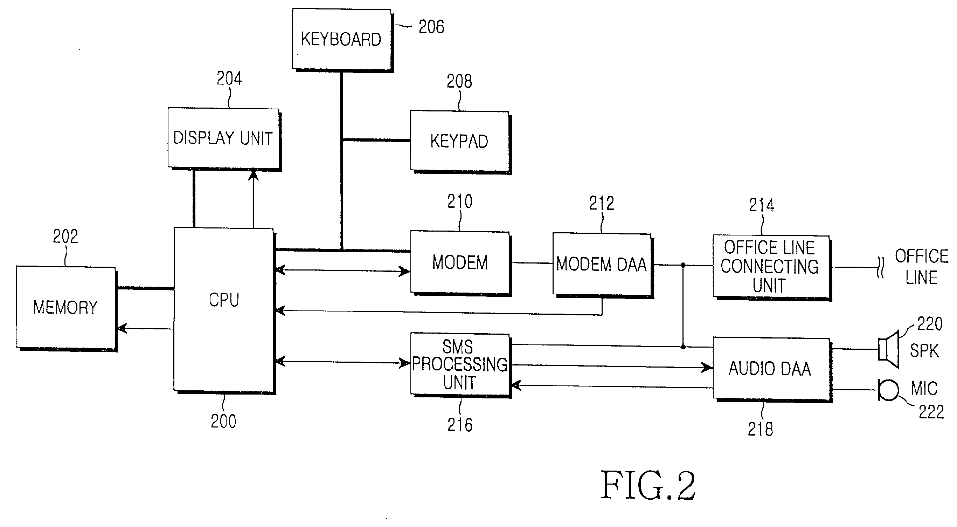

Fig. 1 is a block diagram illustrating an electronic mail service system, in accordance with the principles of the present invention. Fig. 1 illustrates an electronic mail service system based upon telephone numbers adopting the invention. Referring to Fig. 1, information telephones 100 are connected to office lines of a switching system 102, and an electronic mail server 106 and a short message service (SMS) server 116 are connected to the switching system 102 via a data communication network 104. The electronic mail server 106 and the short message service server (SMS) 116 are connected to the Internet 108, and cooperatively, to a mobile communication network 112. In the invention, each of the information telephones 100 is a telephone having an electronic mail function for transmitting/receiving an electronic mail or a short message service message via the office lines as shown in Fig. 2. Also, the Internet 108 is connected with Internet service terminal 110 such as a personal computer, and the mobile communication network 112 is connected with a mobile communication terminal 114 via a radio link.

The electronic server 106 includes a subscriber database in which the information telephones 100 are registered. Upon receiving an electronic mail message sent to a specific one of the information telephones 100 from one of the Internet 108, the mobile communication network 112 and another information telephone 100, the electronic mail server 106 searches the subscriber database and calls the specific information telephone 100 to forward the received electronic mail to the same. Further, the electronic mail server 106 receives an electronic mail, which the information telephones will 100 send via the Internet 108 or the mobile communication network 112, to forward the same to the Internet 108 or the mobile communication network 112.

The short message service server (SMS) 116 has a subscriber database in which the information telephones 100 are registered. Upon receiving a short message service (SMS) message sent to a specific one of the information telephones 100 from one of the Internet 108, the mobile communication network 112 and another information telephone 100, the short message service (SMS) server 116 searches the subscriber database and calls the specific information telephone 100 to forward the received short message service (SMS) message to the specific information telephone 100. Further, the short message service (SMS) server 116 receives a short message service (SMS) message, which the information telephones 100 will send via the Internet 108 or the mobile communication network 112, to forward it to the Internet 108 or the mobile communication network 112.

Fig. 2 is a block diagram illustrating a telephone, in accordance with the principles of the present invention. Fig. 2 illustrates a unit diagram of the information telephone 100 in Fig. 1 according to the preferred embodiment of the invention. An office line connecting unit 214 is connected to one of the office lines of the switching system 102 in Fig. 1. Also, the office line connecting unit 214 is connected to a short message service (SMS) processing unit 216 and an audio discrete analog access (DAA) 218, and to a modem 210 via a modem discrete analog access (DAA) 212. The modem 210 is connected to a central processing unit (CPU) 200 to execute a data communication via the office line under the control of the central processing unit (CPU) 200. The office line connecting unit 214 has a modular jack for connection to the office line and a bridge diode circuit for polarity arrangement as a typical telephone. The modem discrete analog access (DAA) 212 is a modem interface connected between the modem 210 and the office line connecting unit 214 for providing an interface between the modem 210 and the office line.

Upon receiving a ring signal according to the call received from the office line, the modem discrete analog access (DAA) 212 detects the ring signal to inform the central processing unit (CPU) 200 of the ring signal. The short message service (SMS) processing unit 216 is connected to the central processing unit (CPU) 200 and the office line connecting unit 214, and executes a short message service (SMS) message communication via the office line. When a call is received from the office line, the short message service (SMS) processing unit 216 detects caller identification (CID) information following the ring signal to inform the central processing unit (CPU) 200 of the caller identification (CID) information. An example of the short message service (SMS) processing unit 216 includes TTC120 that is a short message service (SMS) chip available from Telechips in Korea.

The caller identification (CID) information indicating the number of a caller is generally transmitted between the first "ON" interval and the second "ON" interval of the ring signal received from the switching system 102. The audio discrete analog access (DAA) 218 is an audio interface for transmitting/receiving an audio signal according to telephone conversation through the office line. The audio discrete analog access (DAA) 218 is connected to the office line connecting unit 214 and the short message service (SMS) processing unit 216, and also to a speaker 220 and a microphone 222 which function as audio input/output units. The display device 204 utilizes a liquid crystal display (LCD) for instance, and displays various information for the electronic mail, the short message service (SMS) message communication, and the telephone conversation under the control of the central processing unit (CPU) 204.

In a keyboard 206 and a keypad 208 functioning as key input units, the keyboard 206 is a character input unit having keys available for character input to provide the central processing unit (CPU) 200 with key input signals according to the key manipulation of a user, and the key pad 208 has number keys available for telephone conversation to provide the central processing unit (CPU) 200 with key input signals according to the key manipulation of the user. The central processing unit (CPU) 200 functioning as a control unit of the information telephone 100 shown in Fig. 2 is connected to a memory 202, the modem 210, the short message service (SMS) processing unit 216, the display unit 204, the keyboard 206 and the keypad 208. The central processing unit (CPU) 200 controls the electronic mail, the short message service (SMS) message communication and the telephone conversation according to the key input via the keyboard 206 and the keypad 208 and the call-receiving from the office line, and accordingly displays various information via the display unit 204. The memory 202 connected to the central processing unit (CPU) 200 stores programs and data available for the operation of the central processing unit (CPU) 200.

In the electronic mail service system of the present invention as set forth above, when the call is received, the information telephone 100 of the invention judges whether the call is forwarded for a general voice conversation or from the electronic mail server 106 or from the short message service (SMS) server 116. Then, the information telephone 100 automatically converts into a call-receiving operation according to the result of confirmation. That is, when an incoming call arrives, the information telephone 100 discriminates the incoming call among the telephone call for voice conversation, the arrival of the electronic mail and the arrival of the short message service (SMS) message based upon the caller identification (CID) information, and accordingly processes the incoming call. So, the information telephone 100 itself converts into the state for receiving the electronic mail or for receiving the short message service (SMS) message even though the user answers in person when the electronic mail or the short message service (SMS) message arrives.

The telephone 100 itself automatically detects the caller identification information of the incoming call without user intervention, and then the telephone 100 itself automatically responds by converting into the appropriate state without user intervention in accordance with the detected caller identification information.

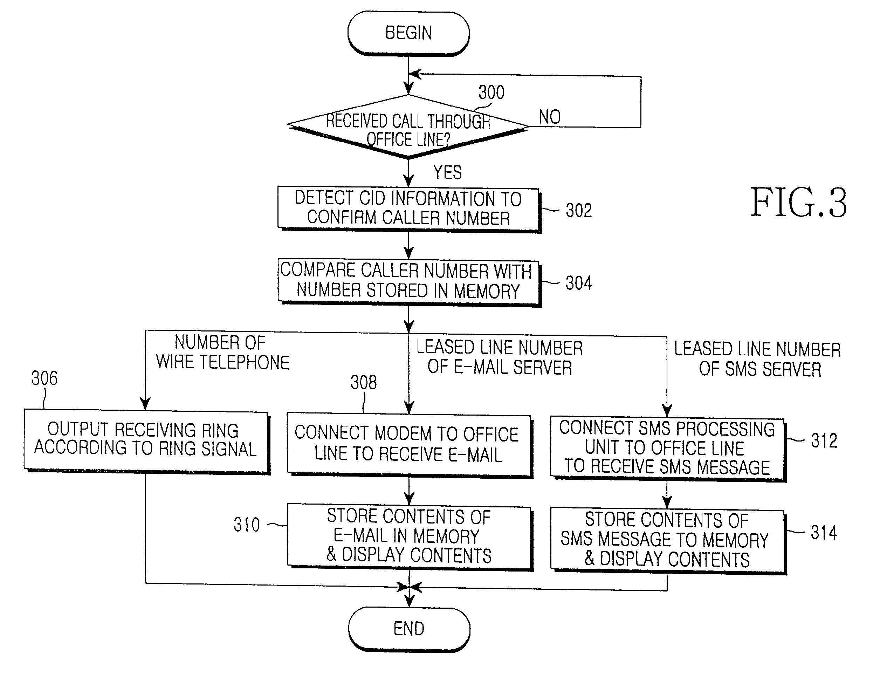

Fig. 3 is a flow chart illustrating a method of processing an incoming call, in accordance with the principles of the present invention. Fig. 3 illustrates a method of processing the incoming call in the central processing unit (CPU) 200 of the information telephone 100 according to the preferred embodiment of the invention, in which the method is embodied into steps 300 to 314. In step 300, upon receiving a ring signal via the office line notifying of the incoming call, the central processing unit (CPU) 200 recognizes the incoming call with the modem discrete analog access (DAA) 212. In step 302, the central processing unit (CPU) 200 detects the caller identification (CID) information following the ring signal with the short message service (SMS) processing unit as set forth above to identify the number of the caller.

In step 304, the central processing unit (CPU) 200 compares the number of the caller with the numbers of leased lines of the electronic mail server 106 and the short message service (SMS) server 116 stored in the memory 202 to confirm that the number of the caller corresponds to which one of the number of a wire telephone, the leased line number of the electronic mail server 106, and the leased line number of the short message service (SMS) server 116. For the purpose of this, the leased line numbers of the electronic server 106 and the short message service (SMS) server 116 are previously stored in memory 202. For example, assuming that the leased line number of the electronic mail server 106 is '014XY', and the leased line number of the short message service (SMS) server 116 is '01XYZ' as the identification number of a short message service (SMS) communication provider, at the arrival of a new electronic mail, the electronic mail server 106 searches the subscriber database to call out the information telephone 100 of the corresponding subscriber.

In the same manner, when a new short message service (SMS) message arrives the short message service (SMS) server 116, the short message service (SMS) server 116 searches the subscriber database to call out the information telephone 100 of the corresponding subscriber. At this time, the switching system 102 sends CID information to the information telephone 100, in which the CID information indicates the caller number '014XY' when the call is from the electronic mail server 106, '01XYZ' when the call is from the short message service (SMS) server 116, and the telephone number of the subscriber when the call is from the wire telephone.

If the number of the caller is identified as that of the wire telephone in step 304, a call-receiving ring is outputted according to the ring signal as usual so that the user can answer the telephone in step 306. On the contrary, if the number of the caller is the leased line number of the electronic mail server 106, the central processing unit (CPU) 200 connects the modem 210 to the office line to receive the electronic mail and displays the contents of the electronic mail via the display unit 204 in steps 308 and 310. In this case, if the contents of the electronic mail are composed of a long sentence, the central processing unit (CPU) 200 stores the subject, caller, received date and time and the like into a region allocated to a received mail item of the memory 202.

If the contents are a short sentence, the whole contents 200 are stored in the memory 202. This eliminates the necessity of enlarging the capacity of the memory 202 since the contents of the message are not necessarily stored into the memory of the information telephone 100 even if the electronic mail is composed of the long sentence with the message size that is larger than a predetermined size. Further, if the number of the caller is identical with the leased line number of the short message service (SMS) server 116, the central processing unit (CPU) 200 connects the short message service (SMS) processing unit 216 to the office line to receive the short message service (SMS) message and displays the contents of the short message service (SMS) message via the display unit 204 in steps 312 and 314. In this case, the central processing unit (CPU) 200 stores the subject, caller, received date and time and the like of the short message service (SMS) message into the region allocated to the received mail item of the memory 202, and displays the contents thereof via the display unit 204.

Therefore, when the electronic mail or the short message service (SMS) message is received, the contents of the electronic mail or the short message service (SMS) message are automatically received and displayed so that the user can confirm the arrival of the new electronic mail or the short message service (SMS) message without linking to the electronic mail server 106 or the short message service (SMS) server 116.

According to the invention as set forth above, the telephone automatically receives the new electronic mail or the short message service (SMS) message at the arrival thereof so that the user can confirm the arrival. So, the invention can advantageously help the user avoid the inconvenience of frequently linking to the electronic mail server or the short message service (SMS) server and avoid the financial burden due to the frequent linking to the electronic mail server or the short message service (SMS) server.

The telephone 100 can be a wire telephone connected directly to the office line by a wire. The telephone 100 can be a mobile telephone, such as a cellular telephone, that is connected to the office line by radio waves or by other means.

The telephone 100 can be comprised of a base and a portable handset, with the base connected directly to the office line by a wire, and with the handset being able to be carried a distance away from the base. In this configuration, the portable handset can be in communication with the base by radio waves or by other means.

The one electronic mail server 106 can be replaced by a plurality of different electronic mail servers each having different caller identification information. The one short message service (SMS) server 116 can be replaced by a plurality of different short message service (SMS) servers each having different caller identification information.

For the purpose of clarity during discussion, the telephone 100 shown in Fig. 2 can be described as a "first" telephone 100. A telephone that is used to make a call to the "first" telephone 100 can be described as a "second" telephone.

Although the preferred embodiments of the present invention have been disclosed for illustrative purposes, those skilled in the art will appreciate that various modifications, additions and substitutions can be made. In particular, the invention can be also applied for receiving the electronic mail only, even though the embodiment of the invention has been described as receiving the short message service (SMS) message as well as the electronic mail. The scope of the invention shall not be defined by the above disclosed embodiments, but by the embodiments disclosed in the accompanying claims and the equivalents thereof.

While the present invention has been illustrated by the description of embodiments thereof, and while the embodiments have been described in considerable detail, it is not the intention of the applicant to restrict or in any way limit the scope of the appended claims to such detail. Additional advantages and modifications will readily appear to those skilled in the art.

## Claims

1. A method, comprising:
when a ring signal of an incoming call is received, detecting caller identification information of the incoming call;
when the detected caller identification information corresponds to an electronic mail server, receiving electronic mail; and
when the detected caller identification information does not correspond to the electronic mail server, outputting a receiving ring according to the ring signal.

2. The method of claim 1, wherein said detecting, receiving, and outputting are performed by a first telephone receiving the incoming call.

3. The method of claim 1 or 2, further comprising storing and displaying contents of the received electronic mail.

4. The method of claim 2 and 3, wherein said storing and displaying are performed by the first telephone, the first telephone including a display unit.

5. The method of one of the claims 1 to 4, wherein said detecting of the caller identification information of the incoming call corresponds to detecting a telephone number of a second telephone, the second telephone initiating the incoming call.

6. The method of one of the claims 1 to 5, wherein said receiving of the electronic mail is performed after connecting a modem to an office line, the ring signal of the incoming call being received through the office line.

7. The method of claim 6, wherein said connecting is automatically performed by the first telephone, the first telephone including the modem.

8. The method of claim 7, further comprising transmitting the incoming call through a data communication network and a switching system to the first telephone from one selected from among the electronic mail server and the second telephone.

9. A method of processing an incoming call, comprising:
when a ring signal of an incoming call is received through an office line by a telephone that has a display and a modem and a short message service processing unit, detecting caller identification information of the incoming call to confirm number of a caller;
when the number of the caller corresponds to a number of an electronic mail server, connecting the modem to the office line to receive at least one electronic mail message;
when the number of the caller corresponds to a number of a short message service server, connecting the short message service processing unit to the office line to receive at least one short message service (SMS) message; and
when the number of the caller corresponds to a number of a wire telephone, outputting a call-receiving ring according to the ring signal.

10. The method of claim 9, further comprising:
when the caller identification information of the incoming call cannot be detected, outputting a call-receiving ring according to the ring signal; and
when the caller identification information of the incoming call does not correspond to an electronic mail server, does not correspond to a number of a short message service server, and does not correspond to a number of a wire telephone, outputting a call-receiving ring according to the ring signal.

11. The method of claim 10, wherein said detecting, outputting, connecting of the modem, and connecting of the short message service processing unit is automatically performed by the telephone without user intervention.

12. The method of claim 10 or 11, further comprising:
storing contents of the at least one electronic mail message in the telephone;
displaying contents of the at least one electronic mail message on the telephone;
storing contents of the at least one short message service message in the telephone; and
displaying contents of the at least one short message service message on the telephone.

13. An apparatus, comprising:
a telephone connected to an office line, said telephone comprising:
a memory for storing at least a first number corresponding to an electronic mail server;
a modem for receiving electronic mail from the electronic mail server through the office line; and
a central processing unit being connected to and for controlling said modem and said memory;
wherein said telephone is adapted for detecting caller identification information of the incoming call when a ring signal of the incoming call is received by said telephone;
said central processing unit is adapted for connecting said modem to the office line to receive the electronic mail from the electronic mail server when the detected caller identification information corresponds to the first number stored in said memory, and
said telephone is adapted for outputting a receiving ring according to the ring signal when the detected caller identification information corresponds to a wire telephone.

14. The apparatus of claim 13, wherein said telephone further comprises:
a short message service processing unit for receiving short message service messages from
a short message service server through the office line;
wherein said memory is adapted for storing at least a second number corresponding to the short message service server, and
said central processing unit is adapted for connecting said short message service processing unit to the office line for receiving a short message service message from the short message service server when the detected caller identification information corresponds to the second number stored in said memory.

15. The apparatus of claim 14, wherein said telephone further comprises:
a display unit being controlled by said central processing unit;
said display unit for displaying the electronic mail received from the electronic mail server;
said display unit for displaying the short message service message received from the short message service server;
wherein said memory is further adapted for storing the electronic mail received from the electronic mail server and for storing the short message service message received from the short message service server.

16. The apparatus of claim 15, wherein said telephone is further adapted for outputting a receiving ring according to the ring signal when the caller identification information of the incoming call cannot be detected, and for outputting a receiving ring according to the ring signal when the caller identification information of the incoming call does not correspond to the stored first number, does not correspond to the stored second number, and does not correspond to a number of a wire telephone.
